Europäisches Patentamt

European Patent Office

Office européen des brevets

(19)

(11) EP 1 411 622 A2

(12) EUROPEAN PATENT APPLICATION

(43) Date of publication:
21.04.2004 Bulletin 2004/17

(51) Int Cl.7: H02M 3/28

(21) Application number: 03256466.8

(22) Date of filing: 14.10.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 14.10.2002 GB 0223771

(71) Applicant: Nicotech Limited
Kings Langley, Hertfordshire WD4 8HD (GB)

(72) Inventor: Heftman, George
Bishops Sortford Hertfordshire CM23 2RY (GB)

(74) Representative: Coles, Graham Frederick
Graham Coles & Co.
24 Seeleys Road
Beaconsfield Buckinghamshire HP9 1SZ (GB)

(54) Inverter circuits

(57) An inverter circuit charges a capacitor (12) incremental for periodically-triggered discharge into a xenon tube (13), from flyback current within primary and secondary windings ($1p$, $1s$) of a transformer. The primary winding ($1p$) is the collector- or drain-load of a transistor (22) that is switched OFF via an inverting transistor (21) to initiate flyback, by the output of a comparator (20) which compares the voltage across an emitter- or source-load resistor (10) of the transistor (22) with the output voltage $Vi$ of a voltage-generator A. Output voltage $Vi$ has a magnitude which decreases or increases with increase or decrease, respectively, of the DC supply voltage $Vs$ such that xenon-tube powering is substantially independent of supply-voltage variation. Generator A may comprise an integrator (34-36) that supplies voltage $Vi$ as the integral of one phase of the output of a voltage-controlled oscillator, which has a duration that increases or decreases according to decrease or increase respectively of the supply voltage.

Fig.2

EP 1 411 622 A2

## Description

This invention relates to inverter circuits.

Inverter circuits for converting DC input voltage to higher-voltage output to charge a capacitive load, are known and find application, for example, in the powering of xenon flash-discharge tubes. Xenon flash-discharge tubes are used to produce repetitive short-duration flashes of light for beacon purposes in giving a visual signal or warning, and in this respect may be used in burglar- and fire-alarm systems and on police, ambulance, fire-service and other vehicles.

In many applications and potential applications of xenon tubes in this way, the voltage of the available DC power supply may have any of a number of nominal values, and in any particular case may be liable to vary significantly from that nominal value. For example, the beacon may be for use on a vehicle having a 12-volt, 24-volt or other battery, and the battery-voltage may vary significantly from the nominal value according to the state of charge of the battery and whether the vehicle's engine is running. It is not in general simple to provide for satisfactory operation of xenon tubes in these circumstances using known inverter circuits, since the output of the inverter circuit is too dependent on the power-supply voltage. Moreover, the majority of xenon tubes operate satisfactorily only within a narrow range of applied voltage.

It is one of the objects of the present invention to provide a form of inverter circuit that may be used in the above circumstances to power a xenon tube satisfactorily throughout a wide range of DC supply-voltage.

According to the present invention there is provided an inverter circuit for charging a capacitive load, in which switching means is connected in series with inductance across DC-input terminals of the circuit to switch cyclically from an ON state to an OFF state for charging the capacitive load incrementally from fly-back energy in the inductance, wherein the circuit includes voltage-generator means for generating a control voltage having a magnitude which decreases or increases with increase or decrease, respectively in the magnitude of the supply voltage applied across the input terminals, and wherein the generated control voltage is applied to switch the switching means OFF in dependence upon the magnitude of current flow in the inductance such that the power output of the circuit is substantially constant with varying supply voltage.

The voltage generator may comprise a voltage-controlled oscillator, and an integrator for integrating one phase of the oscillator-cycle, said one phase having a duration that varies with variation of the supply voltage. The voltage-controlled oscillator may be based on an astable multivibrator circuit.

A xenon flashing-beacon unit incorporating an inverter circuit according to the present invention, will now be described, by way of example, with reference to the accompanying drawings, in which:

Figure 1 shows a xenon flashing-beacon unit including a known form of inverter circuit; and

Figure 2 shows the xenon flashing-beacon unit of Figure 1 modified to incorporate an inverter circuit according to the present invention;

Figure 3 is illustrative of a characteristic utilised in the inverter circuit of Figure 2; and

Figure 4 shows a form of voltage-generator suitable for use in the inverter circuit of Figure 2.

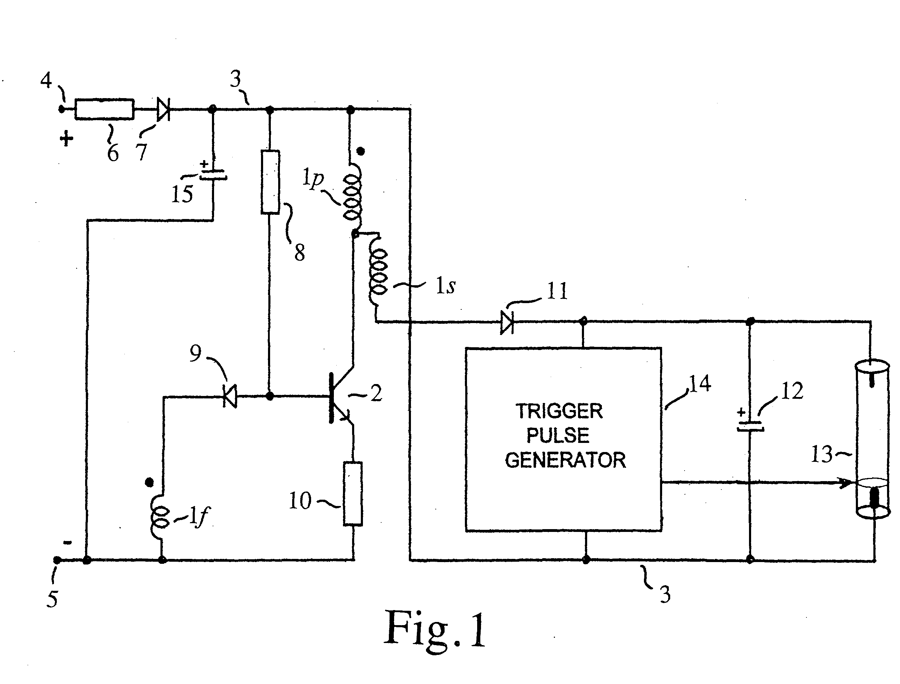

Xenon flashing-beacons typically include an inverter circuit for charging a capacitor incrementally from a battery or other DC supply-source. A xenon tube is connected across the capacitor and a high-voltage pulse is supplied periodically to the trigger electrode of the tube by an astable multivibrator. The trigger pulse fires discharge into the tube of the electrical charge accumulated in the capacitor so that a bright flash of light is emitted by the tube. The xenon-flashing beacon unit of Figure 1 includes an inverter circuit that operates in this way.

Referring to Figure 1, the inverter circuit includes a transformer 1 having primary, secondary and feedback windings 1$p$, 1$s$ and 1$f$, respectively, and a transistor 2. The collector of transistor 2 is connected in series with the primary winding 1$p$ to a positive supply-rail 3 that is connected to the positive terminal 4 of a pair of battery-input terminals 4 and 5 of the circuit via a resistor 6 and diode 7 in series. The base of transistor 2 is connected to the positive rail 3 via a resistor 8, and also to the negative terminal 5 via a diode 9 and the feedback winding 1$f$ in series, whereas the emitter of transistor 2 is connected to terminal 5 via a resistor 10.

The secondary winding 1$s$ is connected to the collector of transistor 2 and in series with a diode 11 to supply charging current to a capacitor 12. A xenon tube 13 is connected across the capacitor 12 and its trigger electrode is supplied with pulses from a pulse generator 14 for firing the tube 13 to emit flashes of light periodically.

The inverter is powered by connection of a battery across the terminals 4 and 5; the resistor 6 and diode 7 as connected in series with a capacitor 15 connected between the rail 3 and terminal 5, provide a power-input filter network and protection against reverse connection of the battery. Powering of the circuit causes current flow into the base of transistor 2 via the resistor 8, switching transistor 2 ON so that current flows in the winding 1$p$. Current flow in the winding 1$p$ increases linearly from zero at the rate $Vs/L$, where $Vs$ is the supply voltage and $L$ is the inductance of the primary winding 1$p$; this is the inductor charge phase of the inverter. The increasing current flow through the transistor 2 causes an increasing voltage to develop across the resistor 10.

When the magnitude of the voltage across the resistor 10 reaches that across the feedback winding 1*f*, diode 9 switches ON and diverts current from the base of transistor 2 causing it to switch OFF (this assumes that the diode-voltage drop across diode 9 is equal to the voltage between the base and emitter of the transistor 2, an assumption that is generally true for practical purposes). When transistor 2 switches OFF, the energy stored in the primary winding 1*p* is equal to *0.5Li²*, where i is the maximum current reached in the primary winding 1*p*. The switching OFF of transistor 2 causes the energy stored in the transformer 1 to be transferred to capacitor 12 via diode 11 in a fly-back phase. On completion of the fly-back phase, the inductance charging-discharging cycle begins again.

The voltage across the feedback winding 1*f* is related to the supply voltage *E* and is equal to *E/N*, where *N* is the ratio of the turns of the primary winding 1*p* to those of the feedback winding 1*f*. Thus, as the voltage supplied to the inverter circuit increases, the voltage across the feedback winding 1*f* increases in proportion. In consequence, the current at the end of the inductance-charging phase increases and the energy transferred to the capacitor 12 at the inverter's output, increases. The performance of the inverter circuit of Figure 1 accordingly has the disadvantage that its output increases with supply voltage.

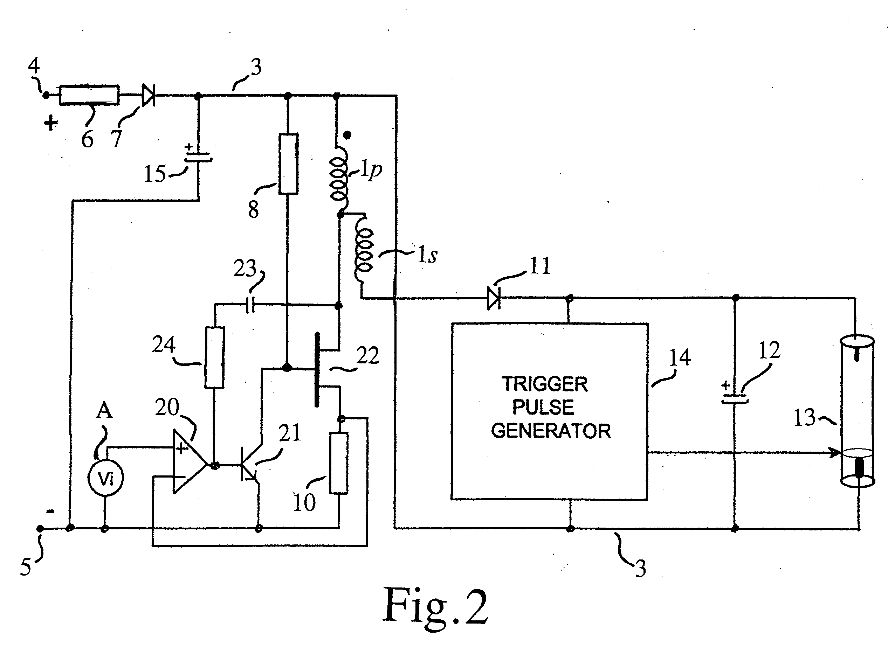

A form of inverter circuit according to the present invention for providing a substantially constant output power over a wide range of supply voltages, will now be described with reference to Figure 2. Figure 2 shows the xenon-flashing beacon unit of Figure 1 modified to incorporate the inverter circuit of the invention (the same references are used for corresponding components in the two circuits).

Referring to Figure 2, the inverter circuit of the invention involves the addition of a voltage-generator A connected to a comparator 20. The comparator 20 drives a transistor 21 which replaces the diode 9 and winding 1*f*, for controlling a transistor 22, in this case a field-effect transistor (FET), that replaces the transistor 2 of Figure 1. The transistor 22 is switched ON when the inverter is powered, by the potential applied to its gate via resistor 8. In response, the current in the winding 1*p* increases linearly from zero at the rate *Vs/L*, where *Vs* is the supply voltage and *L* is the inductance of the winding 1*p*; this is the inductance-charging phase of the circuit.

The increasing current through the transistor 22 causes an increasing voltage to develop across its source-load resistor 10. When the magnitude of this voltage reaches that of the output voltage *Vi* of the generator A, the comparator 20 turns transistor 21 ON. This in its turn, switches OFF the transistor 22 with the result that the voltage across winding 1*p* reverses during the fly-back phase so that the energy in the transformer 1 discharges into the capacitor 12 via the diode 11. At the end of the fly-back phase the process is repeated with feedback to the base of transistor 21 via a capacitor 23 and resistor 24 from the drain of the transistor 22 to ensure that transistor 21 is switched OFF.

The rate of rise of current, *di/dt*, in the winding 1*p* depends on the supply voltage across the terminals 4 and 5, and is governed by the relationship:

$$Vs = -Ldi/dt$$

It is clear therefore that the inductance-charging phase is shorter at higher supply-voltages and the frequency of operation becomes higher. The power output P of the inverter circuit is:

$$P = 0.5 \, LI^2 \, f$$

where *f* is the frequency of operation of the inverter circuit and *I* is the peak current in the winding 1*p*.

The value of peak current *I* sets the magnitude of voltage *Vi* according to the expression:

$$Vi = IR$$

where *R* is the resistance of source-resistor 10.

For constant power output with increasing supply voltage the value of *Vi* needs to be adjusted in dependence upon the supply voltage, so as to decrease as the supply-voltage rises. The approximate form of the relationship is:

$$Vi = k/(Vs + c)$$

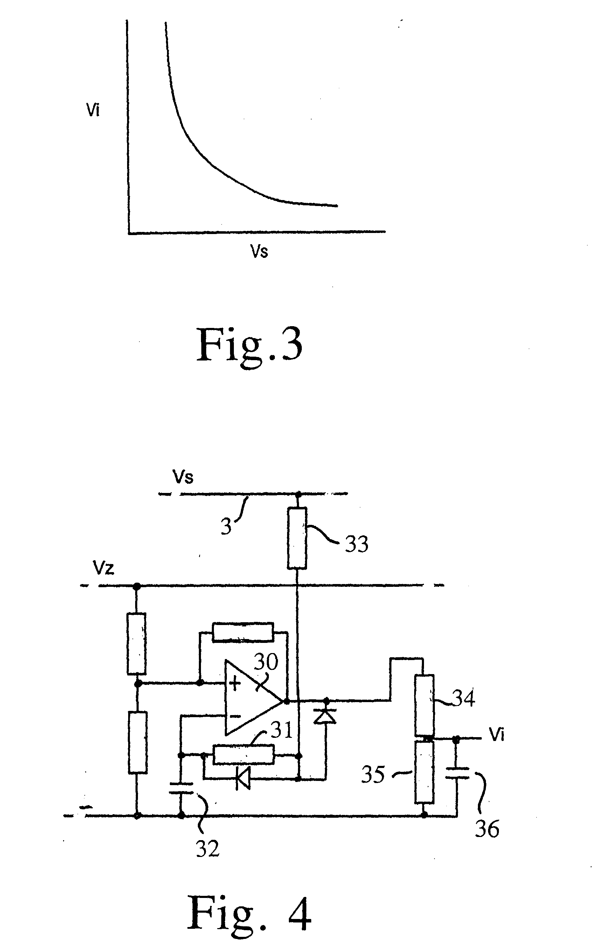

where k is the generator constant and c is a constant representing the average proportion of time the inverter circuit is in fly-back. The shape of this relationship is illustrated by the characteristic of Figure 3.

The required characteristic for the generator A may be implemented by integrating the output of a voltage-controlled oscillator in which one phase of the cycle time is controlled by the input voltage Vs such that the value of the integrated output varies with input voltage Vs according to the relationship illustrated in Figure 3.

A form of circuit that may be used for the generator A of Figure 2 is shown in Figure 4 and will now be described.

Referring to Figure 4, the voltage-controlled oscillator in this case, is a modification of a well-known multivibrator circuit based on a comparator 30. With this modification, the 'output-low' time is determined by the values of a resistor 31 and a capacitor 32, and the 'output-high' time is determined by the values of the resistor 33, the capacitor 32 and the supply voltage Vs. The multivibrator is driven by a voltage Vz that will usually be lower than the supply voltage Vs and is derived from the supply voltage Vs via a zener diode (not shown) so as to be substantially independent of variations in voltage Vs. As a result, the duration of the 'output-high' phase varies with the supply voltage Vs, but the duration of the 'output-low' phase remains substantially independent of variation of voltage Vs.

The output of the modified multivibrator circuit is applied to an integrator circuit formed by resistors 34 and 35 and a capacitor 36. The integrator-circuit output across the capacitor 36 provides the voltage Vi supplied to the comparator 20. As the supply voltage Vs increases or decreases so the capacitor 32 charges faster or slower, respectively, through the resistance 33 connected to the supply rail 3. In consequence the 'output-high' time is reduced or increased as a proportion of the multivibrator cycle and the integrated output voltage *Vi* reduces or increases accordingly.

The characteristic of Figure 3 is achieved by selecting the ratio of values of the resistors 31 and 33. The amplitude at the output of the integrator (across capacitor 36) can be matched to what is necessary for voltage-tolerant operation of the circuit of Figure 2, by appropriate choice of the ratio of the values of the resistors 34 and 35.

The switching functions of the transistor 22 and transistor 21 in the inverter circuit of Figure 2 may be performed by switching devices of other forms from those described. Also, the function of the transistor 21 of the circuit of Figure 2 may be performed instead by any inverting buffering device or circuit.

The power output of most known xenon flashing-beacon units increases with increase in supply voltage so that operation is satisfactory over only a narrow supply-voltage range. The xenon flashing-beacon unit described above with reference to Figure 2 can operate with its performance largely independent of input- or supply-voltage, throughout a wide range of such voltage; for example throughout an input-voltage range of 12-80 volts, as may be encountered when fitted to a fork-lift truck.

**Claims**

1. An inverter circuit for charging a capacitive load, in which switching means is connected in series with inductance across DC-input terminals of the circuit to switch cyclically from an ON state to an OFF state for charging the capacitive load incrementally from fly-back energy in the inductance, wherein the circuit includes voltage-generator means for generating a control voltage having a magnitude which decreases or increases with increase or decrease, respectively in the magnitude of the supply voltage applied across the input terminals, and wherein the generated control voltage is applied to switch the switching means OFF in dependence upon the magnitude of current flow in the inductance such that the power output of the circuit is substantially constant with varying supply voltage.

2. An inverter circuit according to Claim 1 wherein the voltage-generator means comprises a voltage-controlled oscillator, and an integrator for integrating one phase of the oscillator-cycle, said one phase having a duration that varies with variation of the supply voltage.

3. An inverter circuit according to Claim 2 wherein the voltage-controlled oscillator is an astable multivibrator circuit.

4. An inverter circuit according to Claim 3 wherein the multivibrator circuit is driven by a voltage derived from the supply voltage via a zener diode so as to be substantially independent of variations in the supply voltage.

5. An inverter circuit according to any one of Claims 2 to 4 wherein the other phase of the oscillator-cycle is of substantially constant duration independent of variation of the supply voltage.

6. An inverter circuit according to any one of Claims 1 to 5 wherein switching of the switching means OFF is dependent upon a comparison between the control voltage and voltage derived from current flow in the inductance.

7. An inverter circuit according to Claim 6 wherein the switching means is a transistor or FET, and said comparison is between the control voltage and voltage derived across an emitter- or source-load resistance of the transistor or FET.

8. An inverter circuit according to any one of Claims 1 to 7 wherein the relationship between the control voltage *Vi* and the supply voltage Vs is substantially of the form;

$$Vi = k/(Vs + c)$$

where k and c are constants.

9. An inverter circuit according to any one of Claims 1 to 8 connected to a capacitive load for recurrent recharging thereof.

10. An inverter circuit according to Claim 9 wherein the capacitive load is arranged for recurrent discharge into a xenon flash-discharge tube.

11. A xenon-flashing beacon unit including an inverter circuit according to any one of Claims 1 to 8 for powering the xenon flash-discharge tube of the unit.

Fig.1

EP 1 411 622 A2

Fig.2

EP 1 411 622 A2

Fig.3

Fig. 4